Europäisches Patentamt

European Patent Office

Office européen des brevets

(11) Numéro de publication : **0 512 919 A1**

# (12) DEMANDE DE BREVET EUROPEEN

(21) Numéro de dépôt : 92401269.3

(51) Int. Cl.⁵ : **G01D 5/26**

(22) Date de dépôt : **06.05.92**

(30) Priorité : **07.05.91 FR 9105600**

(43) Date de publication de la demande :
**11.11.92 Bulletin 92/46**

(84) Etats contractants désignés :
**BE CH DE GB LI**

(71) Demandeur : **PHOTONETICS S.A.**
**52, Avenue de l'Europe**
**F-78160 Marly le Roi (FR)**

(72) Inventeur : **Lefèvre, Hervé**
**19,rue des Cordelières**
**F-75013 Paris (FR)**
Inventeur : **Trouchet, Denis**
**79 Route de Sartrouville**
**F-78230 Le Pecq (FR)**

(74) Mandataire : **Michelet, Alain et al**
**Cabinet Harlé et Phelip 21 rue de la**
**Rochefoucauld**
**F-75009 Paris (FR)**

(54) **Dispositif de mesure à distance de la position d'un objet.**

(57)    L'invention concerne la mesure à distance de la position d'un objet, par un procédé optique.

Une source lumineuse à spectre large (2) est couplée à une fibre optique (1) dont l'extrémité (7) est au voisinnage de l'objet (6).

Des interférences sont formées entre le faisceau réfléchi par l'objet (6) et celui réfléchi par le dioptre à l'extrémité (7) de la fibre (1).

Des moyens de lecture de l'état d'interférence (3), associés à une unité de calcul (9) permettent d'obtenir la valeur de la distance de l'extrémité (7) de la fibre (1) à l'objet (6).

FIG.1

EP 0 512 919 A1

Jouve, 18, rue Saint-Denis, 75001 PARIS

L'invention concerne un appareil de mesure à distance de la position d'un objet.

Il est connu que des méthodes de mesure interférométrique permettent de connaître, à distance, la position d'un objet.

Selon certaines de ces méthodes de mesure un faisceau lumineux est divisé, l'un des faisceaux obtenu est réfléchi par l'objet alors que l'autre est réfléchi par une surface située à une position de référence. Les deux faisceaux réfléchis sont recombinés et produisent des interférences qui sont fonction du déphasage introduit entre les deux faisceaux réfléchis ce qui permet la mesure de la distance de l'objet.

On connaît par ailleurs des procédés de mesure interférométrique en lumière blanche fondés sur le principe du codage d'un faisceau lumineux par le paramètre à mesurer par modulation de son spectre. Le décodage du spectre permet d'accéder à la valeur du paramètre mesuré.

On a également décrit un dispositif de mesure de déplacement qui comporte à une extrémité d'une fibre optique un objectif de collimation qui génère un faisceau quasiment parallèle et un élément fixe semi-réfléchissant de référence. Cet ensemble est placé devant l'élément mobile dont le déplacement doit être mesuré par rapport à l'élément de référence.

L'élément semi-réfléchissant, en combinaison avec la surface réfléchissante de l'objet forme un interféromètre. Un flux lumineux couplé dans la fibre produit un flux en retour codé par l'effet de l'interféromètre.

Le décodage, par mesure du pas des cannelures du spectre de la lumière codée permet d'accéder à la distance qui existe entre l'élément fixe semi-réfléchissant et l'objet lui-même. Un tel montage nécessite que la surface de l'objet soit perpendiculaire au faisceau collimaté de sortie.

Le but de la présente invention est de proposer un dispositif de mesure à distance de la position d'un objet qui soit simultanément simple, compact et omnidirectionnel.

L'invention concerne un dispositif de mesure à distance de la position d'un objet comprenant une source lumineuse à spectre large, des moyens de production d'interférence en fonction de la position de l'objet produisant un codage du flux lumineux, des moyens de lecture de l'état d'interférence du flux produit par les moyens d'interférence, une fibre optique reliant les moyens de production des interférences à la source et aux dits moyens de lecture.

Selon l'invention la fibre optique est monomode et les moyens de production des interférences sont constitués par le dioptre d'extrémité de la fibre monomode faisant face à l'objet et par une surface de l'objet lui-même. Aucun système optique n'est nécessaire entre le dioptre d'extrémité de la fibre et la surface de l'objet.

Selon un mode de réalisation préféré les moyens de lecture de l'état d'interférence du flux lumineux comportent un coin optique étalant le flux lumineux codé, une barrette de photodiodes recevant le flux lumineux codé étalé et une unité de calcul réalisant l'extraction de la position de l'objet à partir d'une analyse du flux reçu par la barrette de photodiodes.

L'invention sera décrite plus en détail en référence aux dessins dans lesquels :

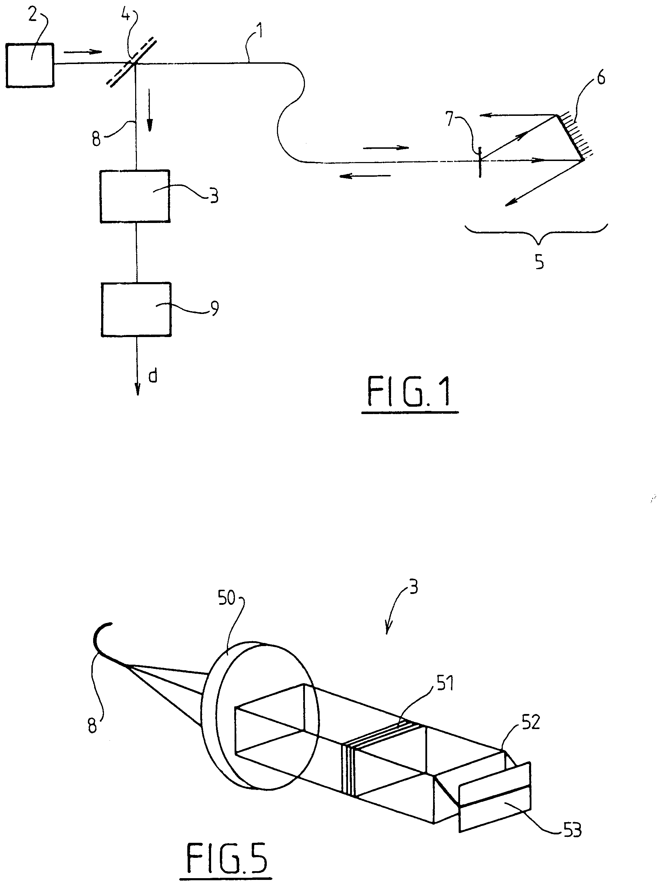

- La figure 1 est une représentation schématique générale du dispositif de l'invention.
- La figure 2 est une vue schématique agrandie de l'extrémité de la fibre.
- La figure 3 est une vue agrandie de l'extrémité de la fibre dans un deuxième mode de réalisation.
- La figure 4 est une représentation d'extrémité de la fibre dans un troisième mode de réalisation.
- La figure 5 est une représentation schématique des moyens de lecture de l'état d'interférence du flux lumineux produit par les moyens d'interférence.

Le dispositif de l'invention comporte une fibre optique monomode 1 à laquelle sont couplés d'une part la source 2, d'autre part les moyens de lecture de l'état d'interférence du flux en retour 3. La source 2 et les moyens de lecture 3 sont couplés par des moyens connus en eux-mêmes à la fibre 1, ces moyens de couplage sont symboliquement représentés par une lame semi-transparente 4 indiquant que le flux émis par la source 2 est injecté dans la fibre 1 et que le flux en retour transmis par la fibre 1 est adressé vers les moyens de lecture 3. La lame semi-transparente peut être remplacée par un coupleur tout-fibre.

L'onde sortant de la fibre monomode 1 est sphérique. Elle est réfléchie par la surface de l'objet tangente au front d'onde. Cela permet une mesure omnidirectionnellle dans le cône d'émission de la fibre 1.

A l'autre extrémité de la fibre 1 le dispositif comporte les moyens de production des interférences 5 en fonction de la position de l'objet 6 par rapport à l'extrémité 7 de la fibre monomode 1.

Il est en soi connu que différents moyens de lecture 3 peuvent être mis en oeuvre pour connaître l'état d'interférence du flux transmis en retour par la fibre 1. Un mode de réalisation particulier, simple est représenté sur la figure 5. Il est décrit plus en détail dans la publication FR-A-2 641 861.

Le flux lumineux transmis par la fibre 8 est collimaté par le système optique 50 et adressé sur un coin optique 51 qui produit un interférogramme. Une lentille cylindrique 52 focalise le faisceau étalé sur la barrette de photodiodes 53. une unité de calcul 9, généralement composée d'un interface de la barrette de photodiodes et d'un micro-ordinateur réalise l'analyse de l'intéférogramme reçu par la barrette de photodiodes et assure l'extraction du déphasage introduit par l'interféromètre 5 et donc, comme nous allons le voir plus loin l'extraction du paramètre d représentant la position de l'objet 6 par rapport à l'extrémité 7 de la fibre optique 1.

De manière en soi connue le coin optique 51 peut être un coin d'air ou un coin de verre.

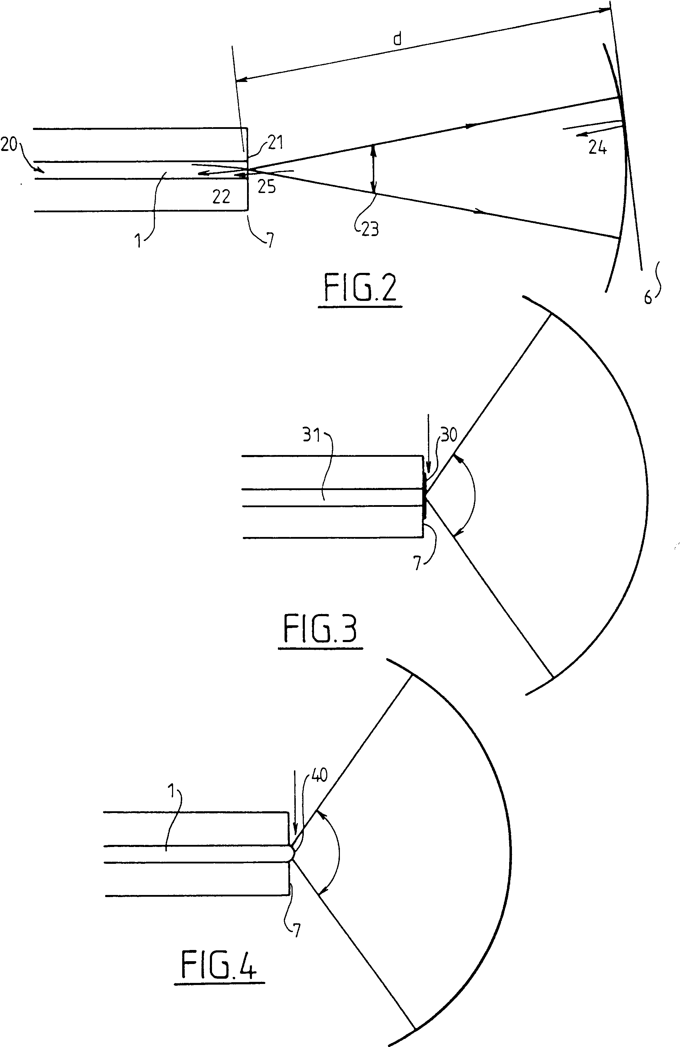

Le système interférométrique 5 est maintenant décrit en référence aux figures 2, 3 et 4. Le flux lumineux 20 transmis par la fibre monomode 1 est partiellement réfléchi par l'interface fibre-air 21 à l'extrémité 7 de la fibre 1 et donne naissance à une onde guidée monomode 22. En l'absence de traitement spécifique le flux réfléchi porté par l'onde guidée monomode 22 est de l'ordre de 4 % du flux incident. Le flux restant émerge de la fibre 1 et donne naissance à une onde divergente sphérique 23 qui est réfléchie ou diffusée par l'objet 6 donnant naissance à un flux 24, une partie de ce flux sous la forme d'une onde guidée monomode 25 est à son tour recouplée dans la fibre monomode 1 et interfère avec l'onde 22 réfléchie comme nous l'avons vu plus haut par l'interface 21 à l'extrémité 7 de la fibre 1. La fibre 1 étant monomode spatialement, la cohérence spatiale est automatiquement assurée pour les interférences entre l'onde 22 et l'onde 25 bien qu'il n'y ait aucune optique de collimation.

Ainsi le flux lumineux transmis en retour par la fibre 1 et adressé aux moyens de lecture 3 est le résultat des interférences de l'onde 22 et de l'onde 25. Un contraste maximum de ces interférences est obtenu lorsque les flux respectifs des faisceaux 22 et 25 sont du même ordre de grandeur c'est-à-dire lorsque le flux couplé en retour à la fibre 1, après réflexion sur l'objet 6 est de l'ordre de 4 % du flux initial.

L'état d'interférence produit dépend du déphasage entre les ondes 22 et 25 et donc de la distance de l'extrémité 21 de la fibre 1 à l'objet 6. Cette distance est déterminée par le rayon de la sphère centrée sur l'extrémité 21 et tangente à l'objet 6. Un tel système de mesure a donc un caractère omnidirectionnel dans la limite du cone de divergence de l'onde émergeant de la fibre.

Le dispositif de mesure à distance de la position d'un objet selon l'invention fonctionne donc de manière omnidirectionnelle analogue à un palpeur mécanique qui permet de mesurer la position d'un objet par rapport à une tête de mesure terminée par une sphère solide. Le front de phase sphérique de l'onde divergente a une fonctionnalité équivalente à la sphère solide d'un palpeur mécanique, mais la mesure se fait ici sans contact.

Selon le type de mesure que l'on cherche à réaliser il peut être opportun que l'ouverture du faisceau émergent par le dioptre 21 de la fibre 1 soit plus ou moins ouvert.

Dans des conditions traditionnelles, lors de la mise en oeuvre d'une fibre 1 monomode l'angle d'ouverture du faisceau émergent est compris entre 15° à 30°. S'il est souhaité augmenter cette ouverture, différentes possibilités peuvent être envisagées. Telle que représentée sur la figure 3 l'extrémité 7 de la fibre 1 peut porter un trou de filtrage 30 dont le diamètre est inférieur à celui du coeur 31 de la fibre 1. Il est ainsi possible d'obtenir un angle d'ouverture supérieur ou égal à 100° car le trou fait diffracter l'onde transmise.

Selon un autre mode de réalisation représenté à la figure 4 l'extrémité 7 de la fibre porte une micro-lentille 40. Cette micro-lentille peut être directement formée à l'extrémité de la fibre ou rapportée sur celle-ci par collage.

Les résultats de mesure satisfaisants sont ainsi obtenus avec une source 2 à spectre large c'est-à-dire une source blanche et en mettant en oeuvre une fibre 1 monomode.

Les mesures produites par le dispositif de l'invention sont de haute précision et permettent des mesures tridimensionnelles y-compris la position d'objets difficiles d'accès. En effet, la tête émettrice est très compacte car uniquement composée d'une extrémité de fibre optique monomode. Un tel système permet des mesures à partir d'une distance de quelques dizaines de micromètres à plusieurs millimètres.

Les moyens de lecture de l'état des interférences 3, peuvent être communs à un grand nombre de capteurs reliés par multiplexage à une même fibre. Il est possible de réaliser un réseau de capteurs permettant la mesure de paramètres de différentes natures dont l'un au moins sera la position d'un objet conformément à la présente invention.

Un dispositif réalisé selon l'invention à une portée allant de quelques dizaines de micromètres à plusieurs millimètres.

Les valeurs numériques suivantes sont fournies à titre d'exemple.

Une puissance lumineuse couplée en entrée dans la fibre 1 de 100 μW produit une puissance réfléchie à l'interface de sortie de 4 μW à cause des 4 % de réflexion de Fresnel. Les 96 μW restant divergent en une onde sphérique de 1/4 de radian d'angle. En supposant que la surface à mesurer est à une distance de 1 mm, l'onde réfléchie a un diamètre de 0,5 mm en revenant sur la fibre (2 x 1 mm x 1/4 radian de divergence). Le mode de la fibre étant typiquement de 5 μm de diamètre, il va se recoupler $4 \cdot 10^{-4}$ de ces 96 μW soit seulement 40 nW. Les interférences sont produites entre une onde de référence de puissance P = 4 μW et une onde recouplée 100 fois plus faible en puissance (p = 40 nW).

Cependant le contraste des interférences dépend du rapport en amplitude entre les deux ondes et non pas du rapport en puissance :

$$P_{interf.} = P + p + 2\sqrt{P}.p\cos\Delta\phi$$

$$P_{interf.} = P[1 + 2\sqrt{p/P}\cos\Delta\phi]$$

Le rapport des puissances est donc de 1 % mais celui des amplitudes est de 10 %. Le contraste des interférences est donc de ± 20 % ce qui permet la lecture de l'état d'interférence dans de bonnes conditions.

La puissance recouplée en fonction de la distance d varie en $1/d^2$ mais le contraste lui ne décroit donc qu'en $1/d$. Même à 5 mm le contraste sera toujours de 4 %.

## Revendications

1. Dispositif de mesure à distance de la position d'un objet comprenant
   - une source lumineuse à spectre large,
   - des moyens de production d'interférences en fonction de la position de l'objet, produisant un codage du flux lumineux,
   - des moyens de lecture de l'état d'interférence
   - une fibre optique reliant les moyens de production des interférences à la source et audit moyen de lecture
   
   caractérisé en ce que la fibre optique est monomode et que les moyens de production des interférences sont constitués par le dioptre d'extrémité de la fibre optique monomode faisant face à l'objet et une surface de l'objet.

2. Dispositif de mesure à distance selon la revendication 1, caractérisé en ce qu'il comporte une micro lentille placée à l'extrémité de la fibre optique faisant face à l'objet augmentant la divergence du faisceau sphérique de sortie.

3. Dispositif de mesure à distance selon la revendication 1, caractérisé en ce qu'il comporte un trou de filtrage placé à l'extrémité de la fibre optique faisant face à l'objet augmentant la divergence de l'onde sphèrique de sortie.

4. Dispositif de mesure à distance selon l'une quelconque des revendications 1 à 3, caractérisé en ce que les moyens de lecture de l'état d'interférence codé spectralement comporte un coin optique restituant un interférogramme, une barrette de photodiodes recevant l'interférogramme décodé, une unité de calcul réalisant l'extraction de la position de l'objet à partir d'une analyse de l'interférogramme reçu par la barrette de photodiodes.

FIG.1

FIG.5

FIG.2

FIG.3

FIG.4

Office européen
des brevets

**RAPPORT DE RECHERCHE EUROPEENNE**

Numero de la demande

EP    92 40 1269

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 613 065 (ELECTRICITE DE FRANCE - SERVICE NATIONAL) <br> * page 6, ligne 24 - page 8, ligne 26; figures 1,2 * | 1 | G01D5/26 |
| X | WO-A-9 008 962 (KENT SCIENTIFIC & INDUSTRIAL PROJECTS LIMITED) | 1 | |
| Y | * page 5, ligne 19 - page 8, ligne 22; figures 1,2 * | 2 | |
| Y | LEOS '88  Lasers and Electro-Optics Society Annual Meeting Conference Proceedings; 2-4 Novembre 1988; Santa Clara,California; Jackson: Intensity or Interferometric Sensors:Which Makes Sense? ; pp274-278 <br> * page 275; figure DISPLACEMENT * | 2 | |

**DOMAINES TECHNIQUES RECHERCHES (Int. Cl.5)**

G01D
G01B

Le présent rapport a été établi pour toutes les revendications

| Lieu de la recherche | Date d'achèvement de la recherche | Examinateur |
|---|---|---|
| LA HAYE | 19 AOUT 1992 | BATTESON A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)